# EUROPEAN PATENT APPLICATION

(11) **EP 1 464 593 A2**
(43) Date of publication of application: **06.10.2004**
(21) Application number: 04008105.1
(22) Date of filing: 02.04.2004
(51) Int. Cl.: B65G 17/00, B65G 33/04, B65G 47/28

(54) **Apparatus for connecting a conveying line to a feeding line having a different pitch**

(30) Priority: 04.04.2003 IT BO20030192
(71) Applicant: MARCHESINI GROUP S.p.A., I-40065 Pian di Macina Pianoro (Bologna) (IT)
(72) Inventor: Monti, Giuseppe, 40065 Pianoro (Bologna) (IT)
(74) Representative: Dall'Olio, Giancarlo

(57) **Abstract**

In an apparatus for interfacing a line (2) for conveying articles (4a) with a feeding line having a different pitch, a plurality of carriages (3) carrying seats or trays for the articles (4a), are driven by conveying chains having a plurality of pins which engage with corresponding recesses made in the carriages (3), in a first area (Z) of the apparatus. Flat projection joined to vertical walls support and guide the carriages (3) in the forward movement direction (W) while the chains are supported and guided by the walls. A worm screw drives the carriages (3) in the forward movement direction (W), in a second area (J) of the apparatus (1); Rollers (10) are provided in the bottom of the carriages for mutual removable coupling with the worm screw (9), in the second area (J) of the apparatus (1).

## Description

The present invention relates to automatic packaging of various articles.

In this case, the invention relates to an apparatus, which can be used to connect a first line for conveying articles with a second line, having product carriers arranged at a different reciprocal distance, or pitch as referred in the following, in particular for feeding a boxing machine.

A particularly known problem in the field being concerned results from adapting the pitch, i.e the product carriers distance, of an outlet line of a packaging machine, which releases packaged articles, to the pitch of the box-like seats of a feeding line leading to a boxing machine.

It is known that many of the packaging machines release the articles at a predetermined reciprocal distance, or pitch, set by the design characteristics, and it becomes essential to adapt this pitch to the distance between the drawer seats of the corresponding feeding line of the boxing machine, situated in cascade.

Doubtlessly, the major drawback of known packaging machines is the necessity to use a complex and expensive additional machine, which must be situated in cascade with the packaging machine and which allows feeding of the boxing machine at a suitable pitch.

The publication EP 1.238.910-A1 discloses a station for connecting the two lines, the outlet line and the feeding line, having different pitches, in which the articles are released into seats mounted onto carriages, which operate along the outlet line and are guided longitudinally and transversely in known way.

The outlet line has a couple of endless conveying belts, interacting with each other, each of which is mounted on corresponding driving wheel and a plurality of driven wheels, which maintain the necessary tension of the belt.

Each conveying belt is provided with a respective series of pins, offset by distances corresponding to the pitches of the lines to be connected, capable of engaging with relative seats made in the carriages, on which the articles are situated.

At a prefixed working section, the pins of a first conveying belt disengage from the carriages, which are taken and pulled by the pins of the second conveying belt, whose pitch is compatible with the feeding line of the boxing machine.

Suitable pushing means transfer the articles situated in the seats carried by the carriages, which are in this case moved by the second conveying belt, into the box-like seats connected to the feeding line of the boxing machine.

Obviously, this requires perfect phase relation between the relative positioning of the pins of the two conveying belts, as well as between the corresponding forward movement speeds of the two belts.

The main disadvantage of the connecting station proposed by the document EP 1.223.910-A1 results from the necessary synchronization of the two conveying belts, which can be particularly difficult at extremely high working speeds, requiring a reduction of the operation rate.

Moreover, for a prefixed period of time, the carriages in the working station are not pulled by any pin connected to the conveying belts, at big risk for the synchronization of the connecting station.

The object of the present invention is to avoid the above mentioned disadvantages by proposing an apparatus for connecting an article conveying line with a feeding line having a different pitch, which is capable of carrying articles in a controlled configuration, in optimal and particularly flexible way, to any boxing machine.

Another object of the present invention is to propose an extremely functional and reliable connecting apparatus, which is capable of feeding articles in controlled configurations, variable within a wide range, to a boxing machine situated in cascade.

A further object of the present invention is to propose a connecting apparatus, which ensures high reliability and productivity standards in any working conditions, and which can be connected in an extremely rapid and intuitive way to any packaging machine situated upstream.

Another object of the present invention is to propose a particularly compact and robust connecting apparatus, which ensures especially simple and easy adjustment, installation and maintenance modes.

The above mentioned objects are achieved by the features of the independent claim, while preferred features are defined in the dependent claims.

The invention will now be described in more detail with reference to particular, non-limiting embodiments and with reference to the accompanying drawings, in which:
- Figures 1a, 1b are schematic lateral views of the connecting apparatus proposed by the present invention, in particularly significant operation steps;

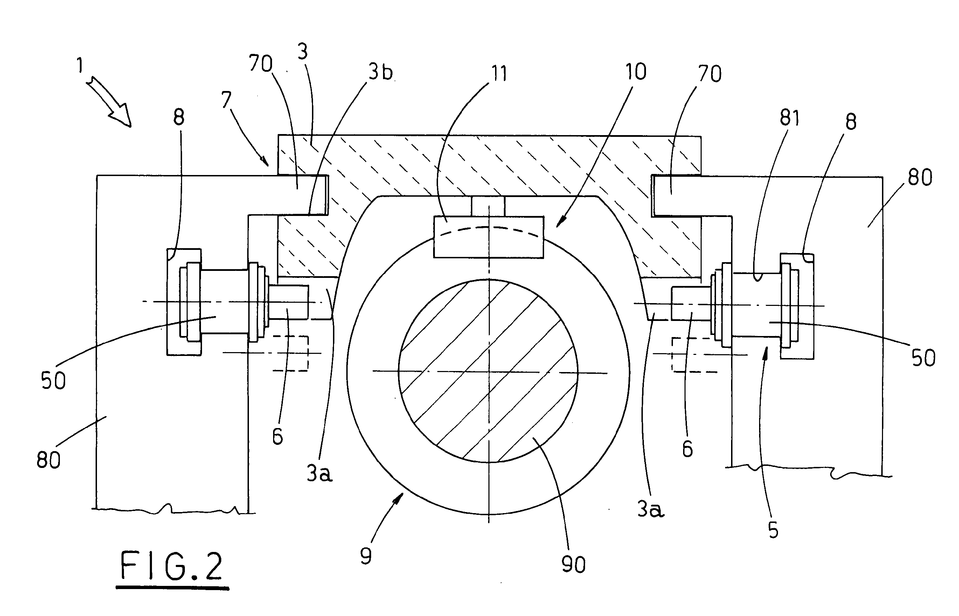

- Figure 2 is a schematic, particularly enlarged view of the above mentioned apparatus, taken along the section II-II shown in Figure 1a;
- Figures 3, 4 are corresponding views, respectively lateral and front views, of a particularly significant component shown in Figure 2.

With reference to the above figures, the general reference number 1 indicates the proposed apparatus for connecting a conveying line for articles 4a, for example released from a packaging machine (not shown), with a feeding line having a different pitch, in particular for feeding a boxing machine (also not shown).

The connecting apparatus 1 includes: a plurality of carriages 3, connected to the conveying line 2, each of which supports a corresponding seat 4 (box-like), for receiving articles 4a; conveying means 5, having a plurality of pins 6, which engage with corresponding recesses 3a made in the carriages 3, to drive the latter, being spaced apart by a first distance P1, along a prefixed forward movement direction W; first means 7 for stably supporting and guiding the carriages 3 in the forward movement direction W.

The conveying means 5 include a pair of substantially parallel side-by-side conveying chains 50, each of which has a plurality of pins 6, aimed at engaging with the corresponding recesses 3a made at both sides of the carriages 3.

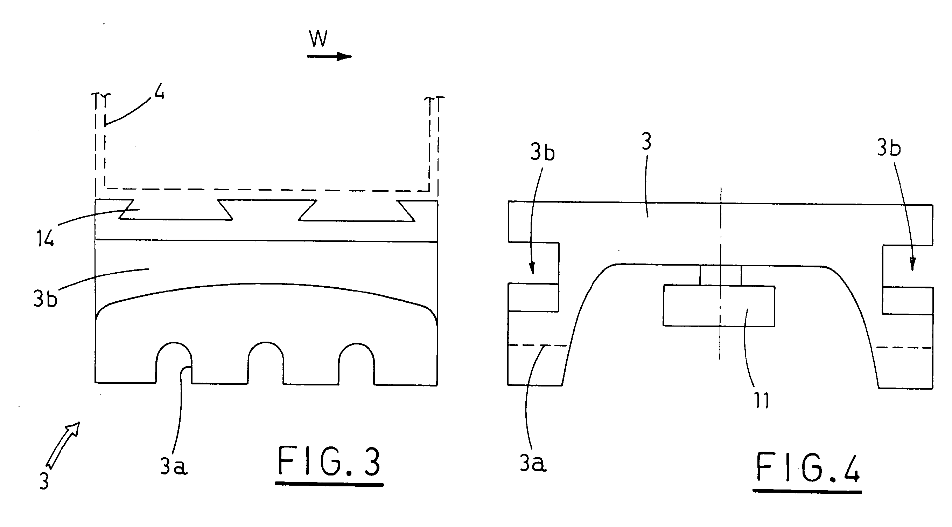

Advantageously, each seat 4 is removably connected to the carriage 3 by relative fastening means 14, preferably double dovetail joint, which can be removed transversely with respect to the forward movement direction W (Figure 3) .

This does not exclude the use of simple dovetail joints of other known solutions.

The connecting apparatus 1 includes also second means 8 for supporting and guiding the conveying chains 50, which determine the engagement of the corresponding pins 6 with the relative recesses 3a of the carriages 3, in a first area Z of the apparatus 1, in order to drive the carriages 3, spaced apart by the distance P1, and which are also capable of imposing the disengagement of the pins 6 from the recesses 3a of the carriages 3, in a second area J of the apparatus 1.

The second support and guiding means 8 include a pair of support walls 80, which are situated on both sides of the carriages 3. Each of the walls has a groove 81, with which a corresponding conveying chain 50 engages in order to be guided longitudinally and/or crosswise.

Suitably, each groove 81 has such a shape, as to impose the engagement of the pins 6 in the recesses 3a of the carriages 3, in the first area Z, and to impose the disengagement of the pins 6 from the recesses 3a of the carriages 3, in the second area J.

The first support and guiding means 7 advantageously include a pair of longitudinal flat projections 70, joined to the corresponding support walls 80 for engaging freely with corresponding notches 3b made in both sides of the carriages 3, so that the carriages can be guided longitudinally and/or crosswise.

Suitable means 9 are aimed at driving the carriages 3 in the forward movement direction W in the second area J, with a pitch varied gradually from the first distance P1 to a second distance P2, different from the first distance P1, substantially equal to the feeding line pitch.

Advantageously, the driving means 9 are operated in phase relation with the conveying chains 50, so as to move continuously the carriages 3 during their transition between the first area Z and the second area J of the apparatus 1.

According to a preferred embodiment, the driving means 9 include a worm screw 90, which is arranged longitudinally with respect to the forward movement direction W, below and centrally with respect to the carriages 3. The worm screw 90 moves the carriages in the second area J of the of the apparatus 1, with a pitch varied gradually from the first distance P1, in the transition sections between the first area Z and the second area J, to the second distance P2.

Consequently, each carriage 3 has means 10 for mutual removable coupling with the driving means 9 in the second area J of the apparatus 1.

The mutual coupling means 10 basically include rollers 11, situated in the lower part of each carriage 3 and aimed at engaging removably with the groove defined by the variable pitch helical path 91 of the worm screw 90, so as to cause continuous motion of the carriages 3 between the first area Z and the second area J of the apparatus 1.

The connecting apparatus 1 proposed by the present invention includes also working means (not shown as widely known), which are operated in time relation with the operation of the worm screw 90 and of the conveying chains 50, and which are capable of transferring articles 4a present in the seats 4 connected to the carriages 3, to the feeding line, while moving in the second area J.

In the following, the operation principle of the proposed connecting apparatus 1 will be described, with reference to a general configuration of a carriage 3 moved by the conveying chains 50 in the first area Z with a first pitch P1, and with the related seat 4 filled with articles 4a.

Due to a appropriate shape of the grooves 81 made in the support walls 80, in the transition section from the first area Z to the second area J, the pins 6 of the conveying chains 50 disengage from the recesses 3a of the carriage 3, still supported and guided by the pair of flat projections 70, inserting freely into relative notches 3b.

In time relation with the passage through the transition section, the roller 11 of the carriage 3 engages with the groove defined by the helical path 91 of the worm screw 90, thus causing the carriage 3 to be moved continuously during the transition between the first area Z and the second area J of the apparatus 1.

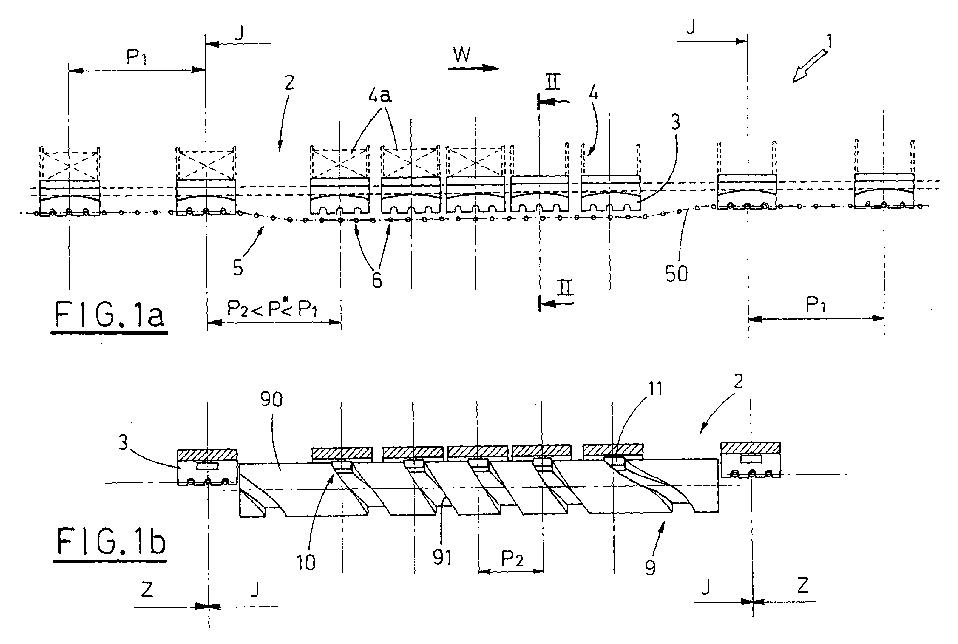

As it is clearly shown in Figures 1a, 1b, the carriages 3 are moved by the worm screw 90 according to a pitch P*, whose value changes gradually from the first distance P1, in the transition section from the first area Z to the second area J, to the second distance P2, in the region corresponding to the transferring of the articles 4a to the feeding line, and again to the first distance P1, in the transition section from the second area J to the first area Z.

Therefore, the change of the distance between the two succeeding carriages is gradual and imposed by the variation of the pitch of the worm screw 90, whose value is equal to the first distance P1 in the transition sections between the first area Z and the second area J, and vice versa, to the second distance P2 in the middle of the second area J, in which the working means transfer the articles 4a to the feeding line.

In the transition section from the second area J to the first area Z, the roller 11 of the carriage 3 disengages, with a pitch equal to the first distance P1, from the groove defined by the helical path 91 of the worm screw 90, and the pins 6 of the conveying chains 50 engage again with the recesses 3a of the carriage 3 and keep the engagement along the whole extension of the first region Z of the apparatus 1.

Therefore, the described apparatus for interfacing a line conveying articles with a feeding line having a different pitch, is capable of bringing articles in a controlled configuration to any boxing machine in optimal and particularly flexible way.

The same connecting apparatus is extremely functional and reliable and allows to feed articles in controlled configurations, different in a wide range, to a packaging machine situated in cascade.

If the pitch of the feeding line of the packaging machine changes, it is possible to adapt the pitch rapidly and easily by a simple substitution of the worm screw acting the apparatus second area.

The high reliability standards characterizing the gradual pitch variation, to which the carriages are subjected near the transition sections between the first area and the second area, assure optimal productivity in any working conditions.

The structural simplicity of the components allows to obtain a particularly compact and strong connecting apparatus, which ensures particularly simple and easy adjustment, installation and maintenance modes.

## Claims

1. apparatus for connecting a line conveying articles with a feeding line having a different pitch, including: a plurality of carriages (3), connected to said conveying line (2), each of which supporting removably at least one corresponding seat (4) for receiving at least one article (4a); conveying means (5), having a plurality of pins (6) capable of engaging with corresponding recesses (3a) made in said carriages (3), to drive the latter spaced apart with a first distance (P1), along a selected forward movement direction (W); first means (7) for supporting and guiding said carriages (3) in the forward movement direction (W); **characterized in that** it includes: second means (8) for supporting and guiding said conveying means (5) and for making the corresponding pins (6) to engage with the said recesses (3a) made in the said carriages (3) for driving the latter spaced apart by said first distance (P1), in a first area (Z) of the apparatus (1), and for making said pins (6) disengage from the relevant recesses (3a) of said carriages (3), in a second area (J) of the apparatus (1); means (9) for driving said carriages (3) in the forward movement direction (W), in said second area (J) of the apparatus (1), so that the said carriages (3) are moved with a pitch changed between said first distance (P1) and a second distance (P2), different from the first (P1), substantially equal to the pitch of the feeding line; means (10) for the mutual removable coupling of each of said carriages (3) with said driving means (9), in said second area (J) of the apparatus (1); and **in that** said driving means (9) are operated in phase relation with said conveying means (5), so as to move continuously said carriages (3) during their transition between said first area (Z) and said second area (J).

2. apparatus, as claimed in claim 1, **characterized in that** it includes working means, operated in phase relation with said driving means (9) for transferring said articles (4a) present in the seats (4) connected to said carriages (3), to the feeding line, in a region corresponding to at least said second area (J).

3. apparatus, as claimed in claim 1 or 2, **characterized in that** said driving means (9) include at least one worm screw (90) arranged longitudinally with respect to said forward movement direction (W), centrally with respect to the carriages (3), for moving the carriages in said second area (J) of the apparatus (1), with a pitch varied gradually between said first distance (P1), in the transition sections between the first area (Z) and the second area (J), and the second distance P2.

4. apparatus, as claimed in claim 3, **characterized in that** said mutual coupling means (10) include rollers (11), situated in the lower part of each carriage (3) and aimed at engaging removably with a groove defined by the variable pitch helical path (91) of the worm screw (90), in said second area (J) of the apparatus (1), so as to move continuously the carriages (3) transiting between said first area (Z) and said second area (J) of the apparatus (1).

5. apparatus, as claimed in any of the previous claims, **characterized in that** said conveying means (5) include at least one endless conveying chain (50) mounted on corresponding driving wheels and driven wheels, and having a plurality of pins (6) for engaging corresponding recesses (3a) made in said carriages (3), to drive stably the carriages spaced apart with said first distance (P1), along said forward movement direction (W).

6. apparatus, as claimed in claim 5, **characterized in that** said second support and guide means (8) include at least one support wall (80), situated beside said carriages (3) and featuring at least one groove (81) for receiving said conveying chain (50) stably, and for guiding longitudinally and/or transversely said conveying chain; and **in that** said groove (81) is shaped in such a way as to make said pins (6) engage with the recesses (3a) of said carriages (3), in said first area (Z), and to make said pins (6) disengage from the recesses (3a) of said carriages (3), in said second area (J).

7. apparatus, as claimed in claim 6, **characterized in that** said first support and guiding means (7) include at least one longitudinal flat projection (70) joined to said support wall (80) for engaging freely with corresponding notches (3b) made laterally on the carriages (3) to guide longitudinally and/or crosswise the carriages.

8. apparatus, as claimed in one of the claims from 1 to 4, **characterized in that** said conveying means (5) include a pair of substantially parallel side-by-side conveying chains (50), having a plurality of pins (6) for engaging with corresponding recesses (3a) made on both sides of said carriages (3), to pull stably the carriages spaced apart with said first distance (P1) in said forward movement direction (W).

9. apparatus, as claimed in claim 8, **characterized in that** said second support and guiding means (8) include a pair of support walls (80), which are situated on both sides of said carriages (3), each wall of said support wall featuring at least one groove (81) for receiving a corresponding conveying chain (50) to be guided longitudinally and/or crosswise; and **in that** each groove (81) has such a shape, as to impose engagement of the pins (6) with the recesses (3a) of said carriages (3), in said first area (Z), and to impose disengagement of the pins (6) from the recesses (3a) of the carriages (3), in said second area (J).

10. apparatus, as claimed in claim 9, **characterized in that** said first support and guiding means (7) include a pair of longitudinal flat projections (70), carried by said support walls (80) for engaging freely with corresponding notches (3b) made in both sides of said carriages (3), in order to be guided longitudinally and/or crosswise.

11. apparatus, as claimed in any of the previous claims, **characterized in that** it includes fastening means (14), aimed at connecting removably each of said seats (4) to the corresponding carriage (3), to receive at least one article (4a).

12. apparatus, as claimed in claim 11, **characterized in that** said fastening means (14) are dovetail joint, simple or double, which can be removed transversely with respect to the forward movement direction (W).

13. apparatus, as claimed in any of the previous claims, **characterized in that** said conveying line (2) is fed upstream of a packaging line.

14. apparatus, as claimed in any of the previous claims, **characterized in that** said feeding line supplies articles (4a) to a boxing machine, situated in cascade thereto.
